(19) Europäisches Patentamt
European Patent Office
Office européen des brevets

(11) **EP 4 442 881 B1**

(12) **EUROPÄISCHE PATENTSCHRIFT**

(45) Veröffentlichungstag und Bekanntmachung des Hinweises auf die Patenterteilung:
**17.09.2025  Patentblatt 2025/38**

(21) Anmeldenummer: **23166484.8**

(22) Anmeldetag: **04.04.2023**

(51) Internationale Patentklassifikation (IPC):
***D04H 1/4274*** *(2012.01)*    ***D04H 1/541*** *(2012.01)*
***B60R 13/08*** *(2006.01)*

(52) Gemeinsame Patentklassifikation (CPC):
**D04H 1/5412; D04H 1/4274; B60R 13/08**

(54) **NACHHALTIGER SCHALLABSORBIERENDER VLIESSTOFF**

SUSTAINABLE SOUND-ABSORBING NONWOVEN

NON-TISSÉ DURABLE ABSORBANT LE SON

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**09.10.2024  Patentblatt 2024/41**

(73) Patentinhaber: **Carl Freudenberg KG**
**69469 Weinheim (DE)**

(72) Erfinder:
• **Weik, Angela**
  **68782 Brühl (DE)**
• **Mitsch, Willi**
  **64646 Heppenheim (DE)**
• **Pleterski, Luka**
  **1000 Ljubljana (SI)**

(56) Entgegenhaltungen:
**EP-A1- 3 246 442    EP-A1- 4 067 547**

**Beschreibung**

Die Erfindung betrifft einen nachhaltigen schallabsorbierenden Vliesstoff mit geringem Flächengewicht. Die Erfindung betrifft ferner ein Verfahren zu seiner Herstellung sowie seine Verwendung.

Schallabsorbierende Vliesstoffe werden für die verschiedensten Anwendungen eingesetzt. Ein wichtiges Anwendungsgebiet ist die Verwendung als Akustikabsorber in der Automobilindustrie. EP3246442 (A1) beschreibt ein schallabsorbierendes Textilkomposit, umfassend

> a) mindestens eine offenporige Trägerlage umfassend grobe Stapelfasern mit einem mittleren Titer von 3 dtex bis 17 dtex und feine Stapelfasern mit einem mittleren Titer von 0,3 dtex bis 2,9 dtex, insbesondere von 0,5 dtex bis 2,9 dtex als Gerüstfasern, und
> b) eine auf der Trägerlage angeordnete mikroporöse Strömungslage umfassend Mikrofasern mit einem Faserdurchmesser von unter 10 $\mu$m. Der Strömungswiderstand des schallabsorbierenden Textilkomposits beträgt von 250 Ns/m$^3$ bis 5000 Ns/m$^3$, insbesondere von 250 Ns/m$^3$ bis 2000 Ns/m$^3$. Die Trägerlage kann Kern/Mantel-Fasern als Bindefasern enthalten.

Es ist vorteilhaft, wenn die Akustikabsorber gute akustische Eigenschaften mit einem geringen Flächengewicht kombinieren. Ferner vorteilhaft ist, wenn sie zumindest anteilig aus nachhaltigen Quellen gefertigt sind.

Ein Ansatz zur Herstellung nachhaltiger Akustikabsorber besteht in der Verwendung wiederaufbereiteter Fasermaterialien als Rohstoff. Derartige kommerziell verfügbare Akustikabsorber weisen aber ein optisch sehr unruhiges Erscheinungsbild auf. Darüber hinaus weisen sie in der Regel nur eine geringe Schallabsorptionsfähigkeit auf und müssen deshalb in einem vergleichsweise hohen Flächengewicht von meist über 600 g/m$^2$ eingesetzt werden. Dies steht wiederum in Kontrast zu den steigenden Bemühungen im Hinblick auf eine gewünschte Leichtbauweise von Automobilen.

Ein weiterer Ansatz bedient sich r-PET Fasern, die aus recycelten PET-Flaschen gewonnen werden. Bei diesem Ansatz kann die gewünschte Schallabsorption zwar mit leichteren Materialien erzielt werden. Jedoch wird die Ressource PET-Flasche zukünftig immer stärker verknappen, weswegen weitere Alternativen nachhaltiger Faserressourcen für die Herstellung von effizienten Akustikabsorbern benötigt werden. Die Aufgabe der Erfindung liegt somit darin einen nachhaltigen Akustikabsorber bereit zu stellen, der als Rohstoffquelle nicht auf r-PET Fasern, die aus recycelten PET-Flaschen gewonnen werden, zurückgreifen muss und der gute akustische und mechanische Eigenschaften aufweist. Eine weitere Aufgabe liegt darin ein Verfahren zur Herstellung des Akustikabsorbers und Verwendungen für ihn bereit zu stellen.

Diese Aufgabe wird gelöst durch einen thermisch verfestigten schallabsorbierenden Vliesstoff mit einem Strömungswiderstand von 150 Ns/m$^3$ bis 5000 Ns/m$^3$, vorzugsweise von 150 Ns/m$^3$ bis 3000 Ns/m$^3$, noch bevorzugter von 150 Ns/m$^3$ bis 2000 Ns/m$^3$ und insbesondere von 150 Ns/m$^3$ bis 1000 Ns/m$^3$, gemessen nach DIN EN 29053, Mai 1993 und einem Flächengewicht von 150 g/m$^2$ bis 600 g/m$^2$ umfassend

> a) Gerüststapelfasern mit einem mittleren Titer von 0,9 dtex bis 8,8 dtex, vorzugsweise von 0,9 dtex bis 6,7 dtex, insbesondere von 0,9 dtex bis 3,3 dtex in einem Anteil von 50 Gew.% bis 90 Gew.%, bevorzugt von 60 Gew.% bis 80 Gew.%, noch bevorzugter von 70 Gew.% bis 80 Gew.%, bezogen auf das Gesamtgewicht des Vliesstoffs und
> b) Kern/Mantel-Bindefasern in einem Anteil von 10 Gew.% bis 50 Gew.%, bevorzugt von 20 Gew.% bis 40 Gew.%, noch bevorzugter von 20 Gew.% bis 30 Gew.%, bezogen auf das Gesamtgewicht des Vliesstoffs,

wobei die Gerüststapelfasern einen Anteil an Reiß-Gerüststapelfasern und die Kern/Mantel-Bindefasern einen Anteil an Reiß-Kern/Mantel-Bindefasern enthalten.

Es wurde festgestellt, dass der erfindungsgemäße Vliesstoff, trotz seines Anteils an Reißfasern sehr gute akustische und mechanische Eigenschaften aufweist. Reißfasern sind Fasern, die in einem mechanischen Verfahren zur Auflösung der Struktur von Textilabfall (Reißprozess) gewonnen worden sind. Die beobachteten guten akustischen und mechanischen Eigenschaften waren überraschend, da die Fasern durch den Reißprozess in der Regel mechanisch sehr beansprucht und dadurch auch teilweise zerstört werden. Dazu kommt, dass Reißfasern in Vliesstoffen des Stands der Technik ein breites Faserlängenspektrum mit einem Anteil kurzer Fasern und einem Anteil nicht aufgelöster Faden- und Flächenstücke haben. Dies führt zu einem gegenüber Primärfasern stark veränderten Eigenschaftsbild. Als Folge war zu erwarten, dass insbesondere die akustischen Eigenschaften leiden. Besonders überraschend war, dass bei der Herstellung des Vliesstoffs der Mantel der Reiß-Kern/Mantel-Bindefasern auch ein zweites Mal zufriedenstellend wiederaufschmilzt und so eine Bindung ermöglicht.

Wie oben dargelegt sind Reißfasern Fasern, die in einem Reißprozess aus Textilabfall gewonnen worden sind. Der Reißprozess ist ein mechanisches Verfahren zur Auflösung der Struktur von Textilabfall. Ziel des Prozesses ist die Rückgewinnung der im Textilabfall enthaltenen Fasern für deren Wiedereinsatz als Rohstoff in einem neuen Produktkreislauf.

Der Reißprozess ist beispielsweise beschrieben in Vliesstoffe: Rohstoffe, Herstellung, Anwendung, Eigenschaften, Prüfung (18. Juli 2012), zweite Ausgabe, Wiley VCH von Hilmar Fuchs, Wilhelm Albrecht.

Primärfasern sind dagegen erfindungsgemäß Fasern, die nicht mit dem Reißverfahren recycelt worden sind. Reißfasern lassen sich von Primärfasern dadurch unterscheiden, dass sie eine geschädigte Faserstruktur aufweisen, was optisch erkennbar ist. Beispielsweise zeigt sich dies bei den Reiß-Gerüstfasern in einer unregelmäßigen bzw. völlig zerstörten Kräuselungsstruktur und/oder inhomogenen Faserlänge. Reiß-Bindefasern weisen ferner, zumindest bevor sie wiederaufgeschmolzen werden, eine zumindest teilweise zerstörte Bindekomponente auf, was sich in einem unregelmäßigen Faserumriss äußert. Sind die Reiß-Kern/Mantel-Bindefasern wie im erfindungsgemäßen Vliesstoff thermisch verfestigt, können sie von thermisch verfestigten Primär-Kern/Mantel-Bindefasern z.B. dadurch unterschieden werden, dass sie einen unregelmäßigeren Aufbau aufweisen, in dem z.B. zwei Kerne von einem gemeinsamen Mantel umschlossen werden oder der Mantel deformiert z.B. verklumpt vorliegt.

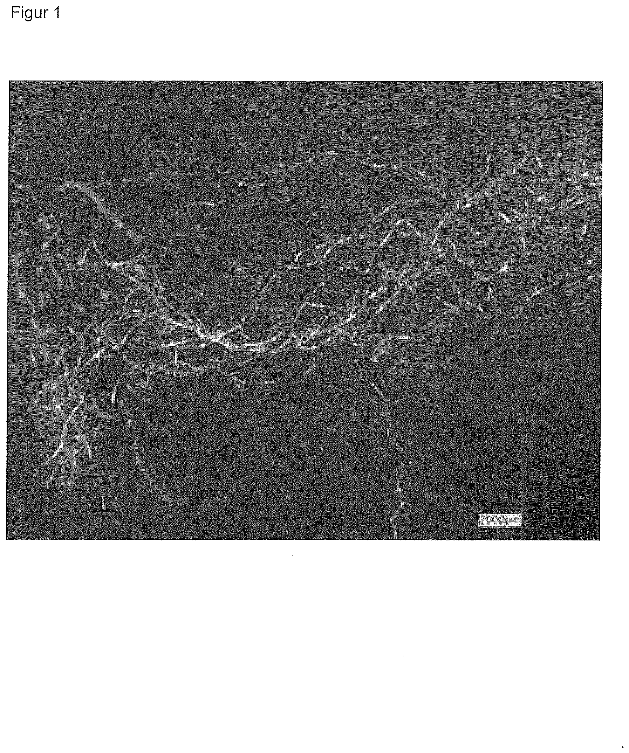

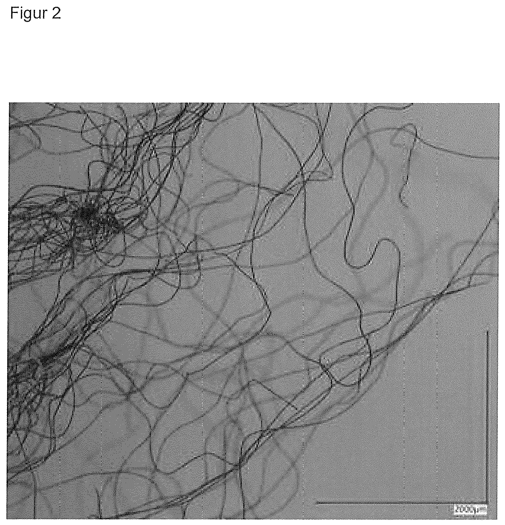

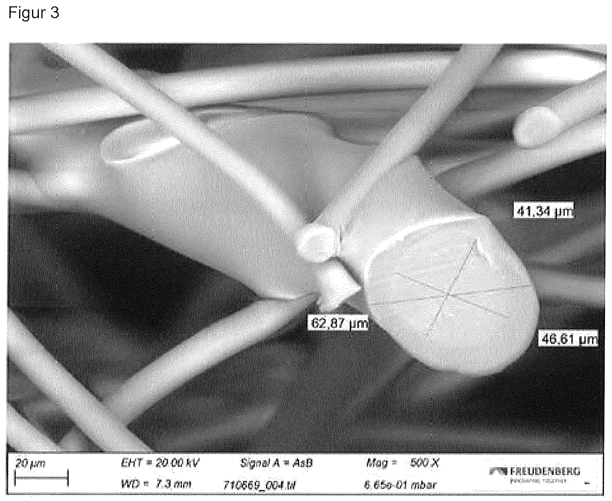

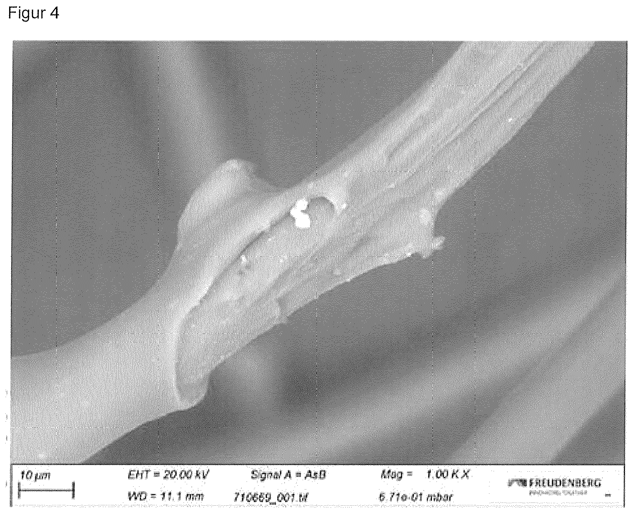

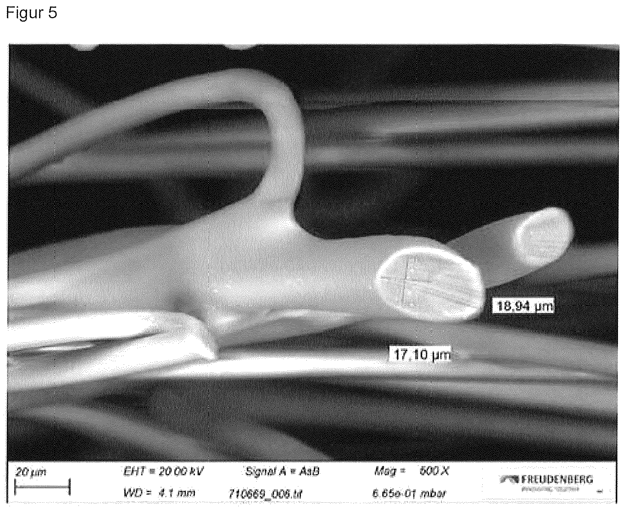

In Fig. 1 ist eine fotographische Abbildung von Primär-Gerüstfasern gezeigt. Man sieht die starke und homogene Kräuselung der Fasern. In Fig. 2 ist eine fotographische Abbildung von Reiß-Gerüstfasern gezeigt. Man sieht eine deutlich geringere und unregelmäßigere Kräuselung der Fasern. In Fig. 3 ist eine REM-Aufnahme einer verschmolzenen Primär-Bindefaser gezeigt. Man sieht einen vergleichsweise regelmäßigen Faserumriss. Ungleichmäßigkeiten werden lediglich durch die Verschmelzung der Bindekomponente verursacht und dadurch, dass an einer Stelle eine Gerüstfaser herausgebrochen ist. Das Herausbrechen ist der Probenpräparation geschuldet, bei der ein Teil des Vliesstoffs herausgeschnitten und in diesem Fall die Faser herausgehebelt wurde. In Fig. 4 ist eine REM-Aufnahme einer Reiß-Bindefaser (nicht wiederverschmolzen) gezeigt. Man sieht deutlich die teilweise zerstörte Bindekomponente. In Fig. 5 ist die REM-Aufnahme einer wiederverschmolzen Reiß-Bindefaser gezeigt. Man erkennt, wie zwei Kerne von einem gemeinsamen Mantel umschlossen werden.

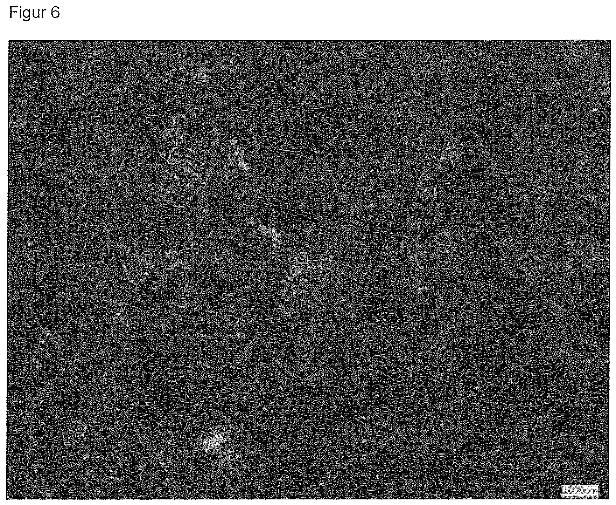

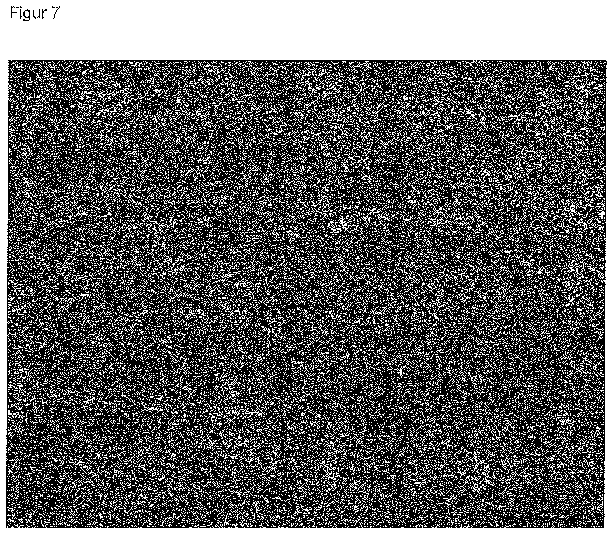

Des Weiteren wurde bei Mikrospopieaufnahmen von Beispielen des erfindungsgemäßen Vliesstoffs gefunden, dass er eine weniger gleichmäßige Faserverteilung aufweist als Vliesstoffe gleichen Aufbaus, die lediglich Primärfasern enthalten. So wurde gefunden, dass die Reiß-Kern/Mantel-Bindefasern "Fasernester" bilden, in denen ein größerer Anteil an Bindefasern vorliegt als im Rest des Vliesstoffs. In Fig. 6 ist ein erfindungsgemäßer Vliesstoff mit weiß gefärbten Fasernestern gezeigt. Im Vergleich ist in Fig. 7 ein Vliesstoff gezeigt, der lediglich Primärfasern und keine Fasernester enthält.

Ein Vliesstoff ist ein Gebilde aus Fasern begrenzter Länge, Endlosfasern (Filamenten) oder geschnittenen Garnen jeglicher Art und jeglichen Ursprungs, die auf irgendeine Weise zu einem Vlies (einer Faserschicht, einem Faserflor) zusammengefügt und auf irgendeine Weise miteinander verbunden worden sind; davon ausgeschlossen ist das Verkreuzen bzw. Verschlingen von Garnen, wie es beim Weben, Wirken, Stricken, der Spitzenherstellung, dem Flechten und Herstellung von getufteten Erzeugnissen geschieht. Nicht zu den Vliesstoffen gehören Folien und Papiere. Vliesstoffe sind beschrieben in der DIN EN ISO 9092, August 2019.

Erfindungsgemäß weist der Vliesstoff Gerüststapelfasern mit einem mittleren Titer von 0,9 dtex bis 8,8 dtex, vorzugsweise von 0,9 dtex bis 6,7 dtex, insbesondere von 0,9 dtex bis 3,3 dtex in einem Anteil von 50 Gew.% bis 90 Gew.%, bevorzugt von 60 Gew.% bis 80 Gew.%, noch bevorzugter 70 Gew.% bis 80 Gew.%, bezogen auf das Gesamtgewicht des Vliesstoffs auf, wobei die Gerüststapelfasern einen Anteil an Reiß-Gerüststapelfasern enthalten.

Unter Gerüststapelfasern sind Stapelfasern zu verstehen, deren Faserkomponenten im Unterschied zu den bindenden Komponenten von Bindefasern nicht verschmolzen vorliegen. Dies ist die übliche Bedeutung von Gerüstfasern. Bevorzugt sind auch die Kern/Mantel-Bindefasern Stapelfasern. Unter Stapelfasern sind, wie in der Technik üblich, Fasern zu verstehen, die im Unterschied zu theoretisch unendlichen Filamenten definierte Längen aufweisen.

Erfindungsgemäß enthalten die Gerüststapelfasern einen Anteil an Reiß-Gerüststapelfasern. Dabei weisen die Reiß-Gerüststapelfasern einen mittleren Titer von 0,9 dtex bis 8,8 dtex, vorzugsweise von 0,9 dtex bis 6,7 dtex, insbesondere von 0,9 dtex bis 3,3 dtex auf. In einer bevorzugten Ausführungsform der Erfindung weisen die Reiß-Gerüststapelfasern eine mittlere Stapellänge von 5 mm bis 60 mm auf, noch bevorzugter von 10 mm bis 55 mm, insbesondere von 10 mm bis 50 mm.

In einer weiteren bevorzugten Ausführungsform der Erfindung enthalten die Reiß-Gerüststapelfasern mindestens ein schmelzspinnbares Polymer. Bevorzugt sind Polymere ausgewählt aus Polyacrylnitril, Polyvinylalkohol, Viskose-, Polyamid, insbesondere Polyamid 6 und Polyamid 6.6, Polyolefin und/oder Polyester. Bevorzugt ist Polyolefin und/oder Polyester. Ganz besonders bevorzugt ist Polyester.

Besonders bevorzugt enthalten die Reiß-Gerüststapelfasern mindestens einen Polyester ausgewählt aus der Gruppe bestehend aus Polyethylenterephthalat, Polypropylenterephthalat, Polytetramethylenterephthalat, Poly(decamethylen)-terephthalat, Poly-1,4-cyclohexylendimethylterephthalat, Polybutylenterephthalat, Polyethylennaphthalat, Polyglykolsäure, Polylaktide, Polycaprolactone, Polyethylenadipate, Polyhydroxyalkanoate, Polyhydroxybutyrate, Poly-3-hydroxybutyrat-co-3-hydroxyvalerate, Polytrimethylenterephthalate, Vektrane, Polyethylennaphthalat, deren Copolymere und/oder deren Gemische. Besonders bevorzugte Polyester sind Polyethylenterephthalat, Polyethylennaphthalat und Polybutylenterephthalat, Gemische und/oder Copolymere hiervon. Besonders bevorzugt enthalten die Reiß-Gerüststapelfasern Polyethylenterephthalat. Dabei enthalten die Reiß-Gerüststapelfasern die vorgenannten Polymere und insbesondere das Polyethylenterephthalat bevorzugt zu 50 Gew.% bis 100 Gew.% noch bevorzugter von 70 Gew.% bis 100 Gew.%, noch bevorzugter von 80 Gew.% bis 100 Gew.%, bezogen auf das Gesamtgewicht der Reiß-Gerüststapelfasern und insbesondere bestehen sie aus den hier genannten Polymeren.

Neben den Reiß-Gerüststapelfasern enthält der Vliesstoff in einer bevorzugten Ausführungsform Primär-Gerüststapelfasern, wobei die Primär-Gerüststapelfasern vorzugsweise einen mittleren Titer von 0,9 dtex bis 8,8 dtex, noch bevorzugter von 0,9 dtex bis 6,7 dtex, insbesondere von 0,9 dtex bis 3,3 dtex aufweisen. Falls vorhanden weisen die Primär-Gerüststapelfasern bevorzugt eine mittlere Stapellänge von 20 mm bis 80 mm auf, noch bevorzugter von 25 mm bis 80 mm, insbesondere von 30 mm bis 80 mm auf.

In einer weiteren bevorzugten Ausführungsform der Erfindung enthalten die Primär-Gerüststapelfasern mindestens ein schmelzspinnbares Polymer. Bevorzugt sind Polymere ausgewählt aus Polyacrylnitril, Polyvinylalkohol, Viskose-, Polyamid, insbesondere Polyamid 6 und Polyamid 6.6, Polyolefin und/oder Polyester. Bevorzugt ist Polyolefin und/oder Polyester. Ganz besonders bevorzugt ist Polyester.

Besonders bevorzugt enthalten die Primär-Gerüststapelfasern mindestens einen Polyester ausgewählt aus der Gruppe bestehend aus Polyethylenterephthalat, Polypropylenterephthalat, Polytetramethylenterephthalat, Poly(decamethylen)-terephthalat, Poly-1,4-cyclohexylendimethylterephthalat, Polybutylenterephthalat, Polyethylennaphthalat, Polyglykolsäure, Polylaktide, Polycaprolactone, Polyethylenadipate, Polyhydroxyalkanoate, Polyhydroxybutyrate, Poly-3-hydroxybutyrat-co-3-hydroxyvalerate, Polytrimethylenterephthalate, Vektrane, Polyethylennaphthalat deren Copolymere und/oder deren Gemische. Besonders bevorzugte Polyester sind Polyethylenterephthalat, Polyethylennaphthalat und Polybutylenterephthalat, Gemische und/oder Copolymere hiervon. Besonders bevorzugt enthalten die Primär-Gerüststapelfasern Polyethylenterephthalat. Dabei enthalten die Primär-Gerüststapelfasern die vorgenannten Polymere und insbesondere das Polyethylenterephthalat bevorzugt zu 50 Gew.% bis 100 Gew.%, noch bevorzugter von 70 Gew.% bis 100 Gew.%, noch bevorzugter von 80 Gew.% bis 100 Gew.%, bezogen auf das Gesamtgewicht der Primär-Gerüststapelfasern und insbesondere bestehen sie aus den hier genannten Polymeren.

Erfindungsgemäß enthält der Vliesstoff Kern/-Mantel-Bindefasern in einem Anteil von 10 Gew.% bis 50 Gew.%, bevorzugt von 20 Gew.% bis 40 Gew.%, noch bevorzugter 20 Gew.% bis 30 Gew.%, bezogen auf das Gesamtgewicht des Vliesstoffs, wobei die Kern/Mantel-Bindefasern einen Anteil an Reiß-Kern/Mantel-Bindefasern enthalten.

Unter Bindefasern sind Fasern zu verstehen, die mindestens eine Bindekomponente aufweisen, die in Form einer mehr oder weniger deformierten Faserstruktur bis hin zu einer vollständig verschmolzenen kontinuierlichen Phase vorliegt. Durch die Bindekomponente kann eine adhäsive Bindung des Flächengebildes bewirkt werden. In Kern/Mantel-Bindefasern fungiert der Mantel als Bindekomponente.

Ebenfalls bevorzugt weisen die Reiß-Kern/-Mantel-Bindefasern einen mittleren Titer im Bereich von 1,7 dtex bis 6,7 dtex auf, vorzugsweise von 1,7 dtex bis 5 dtex auf.

Bevorzugt weisen die Reiß-Kern/Mantel-Bindefasern im Kern ein vom Mantelpolymer verschiedenes Polymer (Kernpolymer) auf. Nach der Wiederverfestigung kann das Kernpolymer teilweise oder auch vollständig von der Bindekomponente umschlossen vorliegen. Das Mengenverhältnis zwischen Kern- und Mantelpolymer kann frei gewählt werden. Als besonders günstig haben sich Verhältnisse von 90:10 bis 10:90 (Gewichtsverhältnis Kern : Mantel in Gew.%), noch bevorzugter von 80 : 20 bis 20 : 80, noch bevorzugter von 80 : 20 bis 30 : 70 und insbesondere von 80 : 20 bis 40 : 60 erwiesen.

Gemäß einer besonders bevorzugten Ausführungsform weist das Mantelpolymer der Reiß-Kern/Mantel-Bindefasern einen niedrigeren Schmelzpunkt auf als das Kernpolymer der Reiß-Kern/Mantel-Bindefasern. Dabei beträgt die Differenz der Schmelztemperaturen des Mantelpolymers und des Kernpolymers vorzugsweise mindestens 5°C, bevorzugt mindestens 8°C, besonders bevorzugt mindestens 10°C. Diese Differenz der Schmelztemperaturen beider Polymere führt zu einer guten Temperaturstabilität.

Das Kernpolymer der Reiß-Kern/Mantel-Bindefasern kann die verschiedensten Materialien enthalten. Bevorzugt ist das Kernpolymer ein schmelzspinnbares Polymer. Bevorzugt sind Polymere ausgewählt aus Polyacrylnitril, Polyvinylalkohol, Viskose-, Polyamid, insbesondere Polyamid 6 und Polyamid 6.6, Polyolefin und/oder Polyester. Bevorzugt ist Polyolefin und/oder Polyester. Ganz besonders bevorzugt ist Polyester.

Besonders bevorzugt enthält das Kernpolymer mindestens einen Polyester ausgewählt aus der Gruppe bestehend aus Polyethylenterephthalat, Polypropylenterephthalat, Polytetramethylenterephthalat, Poly(decamethylen)-terephthalat, Poly-1,4-cyclohexylendimethylterephthalat, Polybutylenterephthalat, Polyethylennaphthalat, Polyglykolsäure, Polylaktide, Polycaprolactone, Polyethylenadipate, Polyhydroxyalkanoate, Polyhydroxybutyrate, Poly-3-hydroxybutyrat-co-3-hydroxyvalerate, Polytrimethylenterephthalate, Vektrane, Polyethylennaphthalat deren Copolymere und/oder deren Gemische. Bevorzugte Polyester sind Polyethylenterephthalat, Polyethylennaphthalat und Polybutylenterephthalat, Gemische und/oder Copolymere hiervon. Besonders bevorzugt enthält das Kernpolymer Polyethylenterephthalat. Dabei enthält das Kernpolymer die vorgenannten Polymere und insbesondere das Polyethylenterephthalat bevorzugt zu 50 Gew.% bis 100 Gew.% noch bevorzugter von 70 Gew.% bis 100 Gew.%, noch bevorzugter von 80 Gew.% bis 100 Gew.%, bezogen auf das Gesamtgewicht des Kernpolymers und insbesondere besteht es aus den hier genannten Polymeren.

Sofern der Vliesstoff Primär-Kern/Mantel-Bindefasern enthält, weist das Kernpolymer der Reiß-Kern-/Mantel-Bindefasern vorzugweise das gleiche Polymer und/oder die gleichen Polymere auf, wie das Kernpolymer der Primär-Kern/Mantel-Bindefasern.

Das Mantelpolymer der Reiß-Kern/Mantel-Bindefasern kann ebenfalls die verschiedensten Materialien enthalten. Bevorzugt enthält das Mantelpolymer Co-Polyester, insbesondere Co-Polyethylenterephthalat. Als Copolymere sind beispielsweise statistische Copolymere, Gradientencopolymere, alternierende Copolymere, Blockcopolymere oder Propfpolymere geeignet. Die Copolymere können aus zwei, drei, vier oder mehr verschiedenen Monomeren bestehen (Terpolymere, Tetrapolymere). Besonders bevorzugte weitere Comonomere sind Monomere folgender Polymere: aromatische und aliphatische Polyester, aromatische und aliphatische Polyamide, aromatische und aliphatische Epoxide, aromatische und aliphatische Polyurethane, Polysiloxane, Polyacrylate, Polyacrylamide.

Dabei enthält das Mantelpolymer der Reiß-Kern/Mantel-Bindefasern das Co-Polyethylenterephthalat bevorzugt zu 50 Gew.% bis 100 Gew.% noch bevorzugter von 70 Gew.% bis 100 Gew.%, noch bevorzugter von 80 Gew.% bis 100 Gew.%, bezogen auf das Gesamtgewicht des Mantelpolymers der Reiß-Kern/Mantel-Bindefasern.

Sofern der Vliesstoff Primär-Kern/Mantel-Bindefasern enthält, weist das Mantelpolymer der Reiß-Kern/Mantel-Bindefasern vorzugsweise das gleiche Polymer und/oder die gleichen Polymere auf, wie das Mantelpolymer der Primär-Kern/Mantel-Bindefasern.

Bevorzugt weist das Mantelpolymer der Reiß-Kern/Mantel-Bindefasern einen Schmelzpunkt im Bereich unterhalb von 250°C, noch bevorzugter von 70 bis 235°C, noch bevorzugter von 125 bis 225°C, besonders bevorzugt von 150 bis 225°C auf.

Sofern der Vliesstoff Primär-Gerüstfasern und/oder Primär-Kern/Mantel-Bindefasern enthält, weisen die Reiß-Kern/Mantel-Bindefasern vorzugsweise den gleichen mittleren Titer und/oder die gleichen Polymere wie die Primär-Kern/Mantel-Bindefasern auf und/oder die Reiß-Gerüstfasern den gleichen mittleren Titer und/oder die gleichen Polymere wie die Primär-Gerüstfasern auf.

In einer bevorzugten Ausführungsform enthält der Vliesstoff Primär-Kern/Mantel-Bindefasern.

Die Primär-Kern/Mantel-Bindefasern sind bevorzugt Stapelfasern, bevorzugt mit einer mittleren Stapellänge von 20 mm bis 80 mm, noch bevorzugter von 25 mm bis 80 mm, insbesondere von 30 mm bis 80 mm.

Ebenfalls bevorzugt weisen die Primär-Kern/-Mantel-Bindefasern einen mittleren Titer im Bereich von 1,7 dtex bis 6,7 dtex auf, vorzugsweise von 1,7 dtex bis 5 dtex auf.

Erfindungsgemäß bevorzugt weisen die Primär-Kern/Mantel-Bindefasern im Kern ein vom Mantelpolymer verschiedenes Polymer (Kernpolymer) auf. Das Mengenverhältnis zwischen Kern- und Mantelpolymer kann frei gewählt werden. Als besonders günstig haben sich Verhältnisse von 90:10 bis 10:90 (Gewichtsverhältnis Kern : Mantel in Gew.%), noch bevorzugter von 80 : 20 bis 20 : 80, noch bevorzugter von 80 : 20 bis 30 : 70 und insbesondere von 80 : 20 bis 40 : 60 erwiesen.

Gemäß einer besonders bevorzugten Ausführungsform weist das Mantelpolymer der Primär-Kern-/Mantel-Bindefasern einen niedrigeren Schmelzpunkt auf als das Kernpolymer der Primär-Kern/Mantel-Bindefasern. Dabei beträgt die Differenz der Schmelztemperaturen des Mantelpolymers und des Kernpolymers vorzugsweise mindestens 5°C, bevorzugt mindestens 8°C, besonders bevorzugt mindestens 10°C. Diese Differenz der Schmelztemperaturen beider Polymere führt zu einer guten Temperaturstabilität.

Das Kernpolymer der Primär-Kern/Mantel-Bindefasern kann die verschiedensten Materialien enthalten. Bevorzugt ist das Kernpolymer ein schmelzspinnbares Polymer. Bevorzugt sind Polymere ausgewählt aus Polyacrylnitril, Polyvinylalkohol, Viskose-, Polyamid, insbesondere Polyamid 6 und Polyamid 6.6, Polyolefin und/oder Polyester. Bevorzugt ist Polyolefin und/oder Polyester. Ganz besonders bevorzugt ist Polyester.

Besonders bevorzugt enthält das Kernpolymer mindestens einen Polyester ausgewählt aus der Gruppe bestehend aus Polyethylenterephthalat, Polypropylenterephthalat, Polytetramethylenterephthalat, Poly(decamethylen)-terephthalat, Poly-1,4-cyclohexylendimethylterephthalat, Polybutylenterephthalat, Polyethylennaphthalat, Polyglykolsäure, Polylaktide, Polycaprolactone, Polyethylenadipate, Polyhydroxyalkanoate, Polyhydroxybutyrate, Poly-3-hydroxybutyrat-co-3-hydroxyvalerate, Polytrimethylenterephthalate, Vektrane, Polyethylennaphthalat deren Copolymere und/oder deren Gemische. Besonders bevorzugte Polyester sind Polyethylenterephthalat, Polyethylennaphthalat und Polybutylenterephthalat, Gemische und/oder Copolymere hiervon. Besonders bevorzugt enthält das Kernpolymer Polyethylenterephthalat. Dabei enthält das Kernpolymer die vorgenannten Polymere und insbesondere das Polyethylenterephthalat bevorzugt zu 50 Gew.% bis 100 Gew.% noch bevorzugter von 70 Gew.% bis 100 Gew.%, noch bevorzugter von 80 Gew.% bis 100 Gew.%, bezogen auf das Gesamtgewicht des Kernpolymers und insbesondere besteht es aus den hier genannten Polymeren.

Das Mantelpolymer der Primär-Kern/Mantel-Bindefasern kann ebenfalls die verschiedensten Materialien enthalten. Bevorzugt enthält das Mantelpolymer Co-Polyester, insbesondere Co-Polyethylenterephthalat. Als Copolymere sind beispielsweise statistische Copolymere, Gradientencopolymere, alternierende Copolymere, Blockcopolymere oder Propfpolymere geeignet. Die Copolymere können aus zwei, drei, vier oder mehr verschiedenen Monomeren bestehen (Terpolymere, Tetrapolymere). Besonders bevorzugte weitere Comonomere sind Monomere folgender Polymere: aromatische und aliphatische Polyester, aromatische und aliphatische Polyamide, aromatische und aliphatische Epoxide, aromatische und aliphatische Polyurethane, Polysiloxane, Polyacrylate, Polyacrylamide.

Dabei enthält das Mantelpolymer der Primär-Kern/Mantel-Bindefasern das Co-Polyethylenterephthalat bevorzugt zu 50 Gew.% bis 100 Gew.%, noch bevorzugter von 70 Gew.% bis 100 Gew.%, noch bevorzugter von 80 Gew.% bis 100 Gew.%, bezogen auf das Gesamtgewicht des Mantelpolymers der Primär-Kern/Mantel-Bindefasern.

Bevorzugt weist das Mantelpolymer der Primär-Kern/Mantel-Bindefasern einen Schmelzpunkt im Bereich unterhalb von 250°C, noch bevorzugter von 70 bis 235°C, noch bevorzugter von 125 bis 225°C, besonders bevorzugt von 150 bis 225°C auf.

In einer bevorzugten Ausführungsform der Erfindung enthält der Vliesstoff Reißfasern in einer Menge von 8 Gew.% bis 100 Gew.%, noch bevorzugter in einer Menge von 10 Gew.% bis 80 Gew.%, noch bevorzugter in einer Menge von 15 Gew.% bis 70 Gew.%, insbesondere in einer Menge von 20 Gew.% bis 60 Gew.%, jeweils bezogen auf das Gesamtgewicht des schallabsorbierenden Vliesstoffs. Ein hoher Anteil an Reißfasern ist dabei im Sinne der Nachhaltigkeit von Vorteil.

In einer weiteren Ausführungsform der Erfindung enthält der Vliesstoff Primärfasern in einer Menge von weniger als 15 Gew.%, bevorzugt von weniger als 10 Gew.%, insbesondere von weniger als 5 Gew.%, jeweils bezogen auf das Gesamtgewicht des schallabsorbierenden Vliesstoffs. In einer weiteren Ausführungsform der Erfindung enthält der Vliesstoff keine Primärfasern.

In einer weiteren Ausführungsform der Erfindung enthält der Vliesstoff Gerüststapelfasern mit einem mittleren Titer von 0,9 dtex bis 8,8 dtex, vorzugsweise von 0,9 dtex bis 6,7 dtex, insbesondere von 0,9 dtex bis 3,3 dtex in einem Anteil von 60 Gew.% bis 80 Gew.%, noch bevorzugter von 70 Gew.% bis 80 Gew.%, bezogen auf das Gesamtgewicht des Vliesstoffs.

In einer weiteren Ausführungsform der Erfindung enthält der Vliesstoff Kern/Mantel-Bindefasern in einem Anteil von 20 Gew.% bis 40 Gew.%, noch bevorzugter von 20 Gew.% bis 30 Gew.%, bezogen auf das Gesamtgewicht des Vliesstoffs.

In einer weiteren bevorzugten Ausführungsform der Erfindung enthält der Vliesstoff Primärfasern in einer Menge von 5 Gew.% bis 92 Gew.%, noch bevorzugter in einer Menge von 20 Gew.% bis 90 Gew.%, noch bevorzugter in einer Menge von 30 Gew.% bis 85 Gew.%, insbesondere 40 Gew.% bis 80 Gew.%, jeweils bezogen auf das Gesamtgewicht des schallabsorbierenden Vliesstoffs.

Weiter bevorzugt beträgt der Anteil an Reiß-Gerüststapelfasern bezogen auf das Gesamtgewicht der Gerüststapelfasern 10 bis 100 Gew. %, bevorzugt von 15 Gew.% bis 80 Gew.%, noch bevorzugter 20 Gew.% bis 70 Gew.%, insbesondere 20 Gew.% bis 60 Gew.%.

Ebenfalls bevorzugt beträgt der Anteil an Reiß-Kern/Mantel-Bindefasern bezogen auf das Gesamtgewicht der Kern/Mantel-Bindefasern 10 bis 100 Gew. %, bevorzugt von 20 Gew.% bis 75 Gew.%, noch bevorzugter 30 Gew.% bis 80 Gew.%, insbesondere 40 Gew.% bis 80 Gew.%.

In einer weiteren bevorzugten Ausführungsform enthält der Vliesstoff 5 Gew.% bis 90 Gew.%, noch bevorzugter von 10 Gew.% bis 80 Gew.%, noch bevorzugter von 15 Gew.% bis 70 Gew.%, noch bevorzugter von 20 Gew.% bis 60 Gew.%, insbesondere von 20 Gew.% bis 50 Gew.%, bezogen auf das Gesamtgewicht des schallabsorbierenden Vliesstoffs, Reiß-Gerüststapelfasern.

In einer weiteren bevorzugten Ausführungsform enthält der Vliesstoff von 1 Gew.% bis 50 Gew.%, noch bevorzugter von 5 Gew.% bis 40 Gew.%, noch bevorzugter von 7,5 Gew.% bis 30 Gew.%, insbesondere von 10 Gew.% bis 20 Gew.%, bezogen auf das Gesamtgewicht des schallabsorbierenden Vliesstoffs, Reiß-Kern/Mantel-Bindefasern.

In einer weiteren bevorzugten Ausführungsform enthält der Vliesstoff, jeweils bezogen auf das Gesamtgewicht des Vliesstoffs:

a) 0 Gew.% bis 70 Gew. %, vorzugsweise von 10 Gew.% bis 65 Gew. %, noch bevorzugter von 20 Gew.% bis 55 Gew. %, insbesondere 30 Gew.% bis 45 Gew. %, Primär-Gerüststapelfasern;
b) 0 Gew.% bis 70 Gew. %, vorzugsweise von 5 Gew.% bis 60 Gew. %, noch bevorzugter von 10 Gew.% bis 50 Gew. %, insbesondere 15 Gew.% bis 40 Gew. %, Primär-Kern/Mantel-Bindefasern;
c) 5 Gew.% bis 90 Gew.%, noch bevorzugter von 10 Gew.% bis 80 Gew.%, noch bevorzugter von 15 Gew.% bis 70 Gew.%, noch bevorzugter von 20 Gew.% bis 60 Gew.%, insbesondere von 20 Gew.% bis 50 Gew.%, Reiß-Gerüststapelfasern;
d) 1 Gew.% bis 50 Gew.%, noch bevorzugter von 5 Gew.% bis 40 Gew.%, noch bevorzugter von 7,5 Gew.% bis 30 Gew.%, insbesondere von 10 Gew.% bis 20 Gew.%, Reiß-Kern/Mantel-Bindefasern.

Der erfindungsgemäße Vliesstoff weist einen Strömungswiderstand von 150 Ns/m$^3$ bis 5000 Ns/m$^3$, vorzugsweise von 150 Ns/m$^3$ bis 3000 Ns/m$^3$, noch bevorzugter von 150 Ns/m$^3$ bis 2000 Ns/m$^3$, insbesondere von 150 Ns/m$^3$ bis 1000 Ns/m$^3$, gemessen nach DIN EN 29053, Mai 1993 auf.

Der erfindungsgemäße Vliesstoff weist ferner bevorzugt einen Schallabsorptionsgrad gemessen in der Alpha Kabine (DIN EN ISO 354:2003), bei einer Dicke von 10 bis 50 mm, noch bevorzugter von 10 bis 35 mm, insbesondere bei einer Dicke von 10 mm, sowie gemessen bei 1000 Hz von mehr als 0,35, bevorzugt mehr als 0,4 auf.

Ferner weist der Vliesstoff erfindungsgemäß ein Flächengewicht von 150 g/m$^2$ bis 600 g/m$^2$, vorzugsweise von 200 g/m$^2$ bis 550 g/m$^2$, noch bevorzugter von 250 g/m$^2$ bis 500 g/m$^2$auf.

Vorzugsweise weist der erfindungsgemäße Vliesstoff eine Dicke gemessen nach DIN EN ISO 9073-2 (1997-02), Verfahren B und C von 10 bis 50 mm, noch bevorzugter von 10 bis 35 mm auf.

Weiter bevorzugt weist der erfindungsgemäße Vliesstoff eine Höchstzugkraft längs (nach DIN EN ISO 9073-2, 2022-05), von 25 N bis 100 N, noch bevorzugter von 30 N bis 100 N, insbesondere von 40 N bis 100 N und/oder eine Höchstzugkraft quer (nach DIN EN ISO 9073-2, 2022-05) von 25 N bis 100 N, noch bevorzugter von 30 N bis 100 N, insbesondere von 40 N bis 100 N auf.

Weiter bevorzugt weist der erfindungsgemäße Vliesstoff eine innere Vliesfestigkeit, gemessen in Anlehnung an DIN 54310 1980 von mehr als 0,5 N/5 cm, beispielsweise von 0,5 N/5 cm bis 10 N/5 cm auf, und/oder von 0,5 N/5 cm bis 3 N/5 cm und/oder von 0,5 N/5 cm bis 2,5 N/5 cm auf.

In einer weiteren bevorzugten Ausführungsform ist der schallabsorbierende Vliesstoff hergestellt aus Textilabfall, der so in einem Reißverfahren aufbereitet wurde, dass der aufbereitete Textilabfall zumindest zu 70 Gew.%, vorzugsweise von 70 Gew.%, bis 100 Gew.%, noch bevorzugter 80 Gew.%, bis 100 Gew.%, noch bevorzugter 90 Gew.%, bis 100 Gew.% bezogen auf die Gesamtmenge an aufbereitetem Textilabfall, textile Einzelfasern enthält. Die textilen Einzelfasern werden zur Bestimmung ihrer Menge aus Proben des aufbereiteten Textilabfalls (10 g) manuell abgetrennt. Es werden mindestens 10 Proben entnommen und das Ergebnis gemittelt.

Weiter bevorzugt ist der schallabsorbierende Vliesstoff hergestellt aus Textilabfall, der so in einem Reißverfahren aufbereitet wurde, dass der aufbereitete Textilabfall nicht aufgelöste Textilreste, wie Nissen, und Flächenstücke in einem Anteil von weniger als 30 Gew.%, vorzugsweise von 0 Gew.%, bis 30 Gew.%, vorzugsweise von 0 bis 20 Gew.%, noch bevorzugter von 0 bis 10 Gew.%, bezogen auf die Gesamtmenge an aufbereitetem Textilabfall enthält. Die nicht aufgelösten Textilreste werden zur Bestimmung ihrer Menge aus Proben des aufbereiteten Textilabfalls (10 g) manuell abgetrennt. Es werden mindestens 10 Proben entnommen und das Ergebnis gemittelt.

Weiter bevorzugt ist der schallabsorbierende Vliesstoff hergestellt aus Textilabfall, der Vliesstoff enthält und in einem Reißverfahren aufbereitet wurde, besonders bevorzugt aus Textilabfall, der Vliesstoff in einem Anteil von mehr als 90 Gew.%, beispielsweise 90 Gew.% bis 100 Gew.%, noch bevorzugter 95 Gew.% bis 100 Gew.% enthält. Besonders bevorzugt ist der schallabsorbierende Vliesstoff hergestellt aus in einem Reißverfahren aufbereitetem Textilabfall, der sortenrein vorliegt.

In einer weiteren bevorzugten Ausführungsform ist der schallabsorbierende Vliesstoff hergestellt aus aufbereitetem Textilabfall, enthaltend

a) Gerüststapelfasern mit einem mittleren Titer von 0,9 dtex bis 8,8 dtex, vorzugsweise von 0,9 dtex bis 6,7 dtex, insbesondere von 0,9 dtex bis 3,3 dtex in einem Anteil von 50 Gew.% bis 90 Gew.%, bevorzugt von 60 Gew.% bis 80 Gew.%, noch bevorzugter 70 Gew.% bis 80 Gew.%, bezogen auf das Gesamtgewicht des aufbereiteten Textilabfalls und

b) Kern/Mantel-Bindefasern in einem Anteil von 10 Gew.% bis 50 Gew.%, bevorzugt von 20 Gew.% bis 40 Gew.%, noch bevorzugter 20 Gew.% bis 30 Gew.%, bezogen auf das Gesamtgewicht des aufbereiteten Textilabfalls.

Ein weiterer Gegenstand der Erfindung ist ein Verfahren zur Herstellung eines schallabsorbierenden Vliesstoffs mit einem Strömungswiderstand von 150 Ns/m$^3$ bis 5000 Ns/m$^3$, vorzugsweise von 150 Ns/m$^3$ bis 3000 Ns/m$^3$, noch bevorzugter von 150 Ns/m$^3$ bis 2000 Ns/m$^3$, insbesondere von 150 Ns/m$^3$ bis 1000 Ns/m$^3$, gemessen nach DIN EN 29053, Mai 1993, und einem Flächengewicht von 150 g/m$^2$ bis 600 g/m$^2$ umfassend folgende Schritte:

I. Bereitstellen von Textilabfall, enthaltend

a) Gerüststapelfasern mit einem mittleren Titer von 0,9 dtex bis 8,8 dtex, vorzugsweise von 0,9 dtex bis 6,7 dtex, insbesondere von 0,9 dtex bis 3,3 dtex in einem Anteil von 50 Gew.% bis 90 Gew.%, bevorzugt von 60 Gew.% bis 80 Gew.%, noch bevorzugter von 70 Gew.% bis 80 Gew.%, bezogen auf das Gesamtgewicht des Textilabfalls; sowie

b) Kern/Mantel-Bindefasern in einem Anteil von 10 Gew.% bis 50 Gew.%, bevorzugt von 20 Gew.% bis 40 Gew.%, noch bevorzugter 20 Gew.% bis 30 Gew.%, bezogen auf das Gesamtgewicht des Textilabfalls;

II. zumindest teilweises Auflösen der textilen Struktur des Textilabfalls in einem Reißprozess, wodurch aufbereiteter Textilabfall erhalten wird, der einen Anteil an Reiß-Gerüststapelfasern und einen Anteil an Reiß-Kern/Mantel-Bindefasern aufweist;

III. Ausbilden eines Vlieses aus dem aufbereitetem Textilabfall;

IV. Thermisches Behandeln des Vlieses, wobei der schallabsorbierende Vliesstoff erhalten wird.

Die Verfahrensschritte I) bis IV) werden bevorzugt nacheinander durchgeführt.

Vorzugsweise wird mit dem erfindungsgemäßen Verfahren ein thermisch verfestigter schallabsorbierender Vliesstoff hergestellt umfassend

a) Gerüststapelfasern mit einem mittleren Titer von 0,9 dtex bis 8,8 dtex, vorzugsweise von 0,9 dtex bis 6,7 dtex, insbesondere von 0,9 dtex bis 3,3 dtex in einem Anteil von 50 Gew.% bis 90 Gew.%, bevorzugt von 60 Gew. % bis 80 Gew.%, noch bevorzugter 70 Gew.% bis 80 Gew.%, bezogen auf das Gesamtgewicht des Vliesstoffs und

b) Kern/Mantel-Bindefasern in einem Anteil von 10 Gew.% bis 50 Gew.%, bevorzugt von 20 Gew.% bis 40 Gew.%, noch bevorzugter 20 Gew.% bis 30 Gew.%, bezogen auf das Gesamtgewicht des Vliesstoffs,

wobei die Gerüststapelfasern einen Anteil an Reiß-Gerüststapelfasern und die Kern/Mantel-Bindefasern einen Anteil an Reiß-Kern/Mantel-Bindefasern enthalten und wobei der schallabsorbierende Vliesstoff ein Flächengewicht von 150 g/m² bis 600 g/m² aufweist.

Weiter bevorzugt wird mit dem erfindungsgemäßen Verfahren ein thermisch verfestigter schallabsorbierender Vliesstoff gemäß einer oder mehrerer der hier beschriebenen Ausführungsformen hergestellt.

Schritt I. des erfindungsgemäßen Verfahrens umfasst das Bereitstellen von Textilabfall, der Gerüststapelfasern mit einem mittleren Titer von 0,9 dtex bis 8,8 dtex, vorzugsweise von 0,9 dtex bis 6,7 dtex, insbesondere von 0,9 dtex bis 3,3 dtex in einem Anteil von 50 Gew.% bis 90 Gew.%, bevorzugt von 60 Gew.% bis 80 Gew.%, noch bevorzugter von 70 Gew.% bis 80 Gew.%, bezogen auf das Gesamtgewicht des Textilabfalls, aufweist; sowie Kern/Mantel-Bindefasern in einem Anteil von 10 Gew.% bis 50 Gew.%, bevorzugt von 20 Gew.% bis 40 Gew.%, noch bevorzugter 20 Gew.% bis 30 Gew.%, bezogen auf das Gesamtgewicht des Textilabfalls, aufweist. Für das erfindungsgemäße Verfahren eignen sich die verschiedensten Textilabfälle. Bevorzugt enthält der Textilabfall Fasern gemäß einer oder mehrerer Ausführungsformen, wie sie für den erfindungsgemäßen schallabsorbierenden Vliesstoff beschrieben sind.

Der Textilabfall kann dabei aus den verschiedensten Bereichen wie Bekleidung oder technischen Textilien stammen. Bevorzugt enthält der Textilabfall Vliesstoff. Besonders bevorzugt enthält der Textilabfall Vliesstoff in einem Anteil von mehr als 90 Gew.%, beispielsweise von 90 Gew.% bis 100 Gew.%, noch bevorzugter von 95 Gew.% bis 100 Gew.%, bezogen auf das Gesamtgewicht des Textilabfalls. Der Textilabfall kann auch Gewebe und/oder Gewirke enthalten. Der Textilabfall liegt ferner vorzugsweise sortenrein vor. Ferner kann der Textilabfall als Alttextilie, als Filament- oder Fadenreste, oder auch als Randstreifen aus der Flächenherstellung vorliegen. Auch Gemische verschiedener Formen sind möglich.

An Schritt I. kann sich der optionale Schritt I.1 anschließen, in dem der Textilabfall vorzerkleinert wird, vorzugsweise mittels Schneiden.

Ferner kann sich an Schritt I. oder an Schritt I.1 der optionale Schritt I.2 anschließen, in dem der gegebenenfalls vorzerkleinerte Textilabfall befeuchtet und/oder geschmälzt wird. Dies ist vorteilhaft für die anschließende Strukturauflösung. Ferner kann die Faserreibung reduziert und dadurch der Energieaufwand gesenkt und die Faserschädigung vermindert werden.

Schritt **II.** des Verfahrens umfasst das zumindest teilweise Auflösen der textilen Struktur des Textilabfalls in einem Reißprozess, wodurch aufbereiteter Textilabfall erhalten wird.

In einer bevorzugten Ausführungsform wird der Reißprozess in einer Reißmaschine durchgeführt, deren Wirkprinzip darin besteht, dass der Textilabfall durch ein transportierend und gleichzeitig klemmend wirkendes Einzugssystem einer Reißeinheit, vorzugsweise einer rotierenden Trommel, auf der Reißorgane angeordnet sind, zugeführt wird. Die rotierende Trommel ist vorzugsweise ein Reißtambour. Die Reißorgane sind bevorzugt stift-, haken- oder zahnförmig ausgebildet. Bevorzugt sind die Reißorgane als Sägezahngarnitur ausgebildet. Die Reißorgane greifen in den durch das Einzugssystem geklemmten Textilabfall und zerreißen zumindest teilweise dessen Struktur unter Einwirkung einer Zugbeanspruchung.

Der Textilabfall kann ein oder mehrere Male einem Reißvorgang unterzogen werden. Dabei kann auch nur ein Teil des Textilabfalls mehrere Male einem Reißvorgang unterzogen werden. Vorzugsweise umfasst der Reißprozess mindestens zwei Reißvorgänge. Zu diesem Zweck kann der Textilabfall nach einem Reißvorgang in einer Reißeinheit der gleichen Reißeinheit nochmal zugeführt werden. Es können aber auch mehrere Reißeinheiten in Reihe angeordnet sein. Die Materialübergabe zwischen den Reißeinheiten kann beispielsweise durch Siebtrommeln erfolgen. In einer bevorzugten Ausführungsform der Erfindung wird die Anzahl und Feinheit der auf den verschiedenen Reißeinheiten angeordneten Reißorgane an die voranschreitende Strukturauflösung des Textilabfalls angepasst.

Das Einzugssystem kann ein Walzenpaar oder die Kombination einer rotierenden Walze und einer starren Mulde umfassen. Bevorzugt ist das Einzugssystem als Muldeneinzug ausgebildet. In diesem befindet sich der Materialklemmpunkt in der Muldenkante. Dies ist vorteilhaft, da er damit näher an den Wirkungsbereich der Reißorgane herangebracht werden kann.

Durch Einstellung verschiedener Parameter des Reißprozesses, insbesondere durch die Anzahl der Reißeinheiten, die der Textilabfall passiert, kann eine gewünschte Strukturauflösung des Textilabfalls eingestellt werden.

Bevorzugt wird die textile Struktur des Textilabfalls so stark aufgelöst, dass der aufbereitete Textilabfall höchstens 30 Gew.%, vorzugsweise von 0 Gew.%, bis 30 Gew.%, noch bevorzugter von 0 bis 20 Gew.%, noch bevorzugter von 0 bis 10 Gew.%, nicht aufgelöste Textilreste, wie Nissen und Flächenstücke enthält. Vorzugsweise wird die textile Struktur des Textilabfalls so stark aufgelöst, dass der aufbereitete Textilabfall mindestens 70 Gew.%, vorzugsweise von 70 Gew.%, bis 100 Gew.%, noch bevorzugter 80 Gew.%, bis 100 Gew.%, noch bevorzugter 90 Gew.%, bis 100 Gew.%, bezogen auf das Gesamtgewicht des aufbereiteten Textilabfalls, textile Einzelfasern enthält. Mithin enthält der in Schritt II. erhaltene aufbereitete Textilabfall vorzugsweise zumindest zu 70 Gew.%, noch bevorzugter von 70 Gew.% bis 100 Gew.%, noch bevorzugter 80 Gew.%, bis 100 Gew.%, noch bevorzugter 90 Gew.%, bis 100 Gew.% textile Einzelfasern. Weiter bevorzugt enthält der in Schritt II. erhaltene aufbereitete Textilabfall nicht aufgelöste Textilreste, wie Nissen und Flächenstücke in einem Anteil von weniger als 30 Gew.%, vorzugsweise von 0 Gew.%, bis 30 Gew.%, noch bevorzugter von 0 bis 20 Gew.%, noch bevorzugter von 0 bis 10 Gew.%, bezogen auf die Gesamtmenge an aufbereitetem Textilabfall. Zur Bestimmung des Anteils der nicht aufgelösten Textilreste werden die nicht aufgelösten Textilreste aus den Proben (10 g) manuell abgetrennt. Es werden mindestens 10 Proben entnommen und das Ergebnis gemittelt.

Der in Schritt II. erhaltene aufbereitete Textilabfall kann zur Qualitätsverbesserung nachbehandelt werden. Beispielsweise kann eine Feinausreinigung zur Reduzierung des Kurzfaseranteils und/oder zur Separation von Grob- und Fremdteilen durchgeführt werden. Ferner können gewünschte Faserausrüstungen, wie zum Beispiel Flammenfest-, Fungizid- und/oder Antistatikausrüstungen aufgebracht werden.

In einer bevorzugten Ausführungsform der Erfindung weist der in Schritt II. erhaltene aufbereitete Textilabfall auf:

a) Gerüststapelfasern mit einem mittleren Titer von 0,9 dtex bis 8,8 dtex, vorzugsweise von 0,9 dtex bis 6,7 dtex, insbesondere von 0,9 dtex bis 3,3 dtex in einem Anteil von 50 Gew.% bis 90 Gew.%, bevorzugt von 60 Gew.% bis 80 Gew.%, noch bevorzugter 70 Gew.% bis 80 Gew.%, bezogen auf das Gesamtgewicht des aufbereiteten Textilabfalls; sowie
b) Kern/Mantel-Bindefasern in einem Anteil von 10 Gew.% bis 50 Gew.%, bevorzugt von 20 Gew.% bis 40 Gew.%, noch bevorzugter 20 Gew.% bis 30 Gew.%, bezogen auf das Gesamtgewicht des aufbereiteten Textilabfalls.

In einer weiter bevorzugten Ausführungsform der Erfindung weist der in Schritt II. erhaltene aufbereitete Textilabfall, jeweils bezogen auf das Gesamtgewicht des aufbereiteten Textilabfalls auf:

a) 5 Gew.% bis 90 Gew.%, noch bevorzugter von 10 Gew.% bis 80 Gew.%, noch bevorzugter von 15 Gew.% bis 70 Gew.%, noch bevorzugter von 20 Gew.% bis 60 Gew.%, insbesondere von 20 Gew.% bis 50 Gew.% % Reiß-Gerüststapelfasern mit einem mittleren Titer von 0,9 dtex bis 8,8 dtex, vorzugsweise von 0,9 dtex bis 6,7 dtex, insbesondere von 0,9 dtex bis 3,3 dtex ;
b) 1 Gew.% bis 50 Gew.%, noch bevorzugter von 5 Gew.% bis 40 Gew.%, noch bevorzugter von 7,5 Gew.% bis 30 Gew.%, insbesondere von 10 Gew.% bis 20 Gew.% Reiß-Kern/Mantel-Bindefasern.

An Schritt II. kann sich der optionale Schritt II.1 anschließen, umfassend das Vermischen des in Schritt II. erhaltenen aufbereiteten Textilabfalls mit Primär-Gerüststapelfasern und/oder Primär-Kern/Mantel-Bindefasern, wobei ein Primärfasern enthaltender aufbereiteter Textilabfall erhalten wird. Bevorzugt wird mit Schritt II.1 ein aufbereiteter Textilabfall erhalten, der bezogen auf das Gesamtgewicht des aufbereiteten Textilabfalls folgende Komponenten aufweist:

a) 0 Gew.% bis 70 Gew. %, vorzugsweise von 10 Gew.% bis 65 Gew. %, noch bevorzugter von 20 Gew.% bis 55 Gew. %, insbesondere 30 Gew.% bis 45 Gew. %, Primär-Gerüststapelfasern;
b) 0 Gew.% bis 70 Gew. %, vorzugsweise von 5 Gew.% bis 60 Gew. %, noch bevorzugter von 10 Gew.% bis 50 Gew. %, insbesondere 15 Gew.% bis 40 Gew. %, Primär-Kern/Mantel-Bindefasern;
c) 5 Gew.% bis 90 Gew.%, noch bevorzugter von 10 Gew.% bis 80 Gew.%, noch bevorzugter von 15 Gew.% bis 70 Gew.%, noch bevorzugter von 20 Gew.% bis 60 Gew.%, insbesondere von 20 Gew.% bis 50 Gew.%, Reiß-Gerüststapelfasern;
d) 1 Gew.% bis 50 Gew.%, noch bevorzugter von 5 Gew.% bis 40 Gew.%, noch bevorzugter von 7,5 Gew.% bis 30 Gew.%, insbesondere von 10 Gew.% bis 20 Gew.%, Reiß-Kern/Mantel-Bindefasern.

In Schritt III. des erfindungsgemäßen Verfahrens erfolgt das Ausbilden eines Vlieses aus dem in Schritt II. oder II.1 erhaltenen aufbereiteten Textilabfall. Die Vliesbildung kann auf verschiedene dem Fachmann bekannte Weisen beispielsweise mittels Krempeln erfolgen.

In Schritt IV. des erfindungsgemäßen Verfahrens erfolgt das thermische Behandeln des in Schritt III. erhaltenen Vlieses, wobei ein schallabsorbierender Vliesstoff mit einem Strömungswiderstand von 150 Ns/m$^3$ bis 5000 Ns/m$^3$, vorzugsweise von 150 Ns/m$^3$ bis 3000 Ns/m$^3$, noch bevorzugter von 150 Ns/m$^3$ bis 2000 Ns/m$^3$, insbesondere von 150 Ns/m$^3$ bis 1000 Ns/m$^3$, gemessen nach DIN EN 29053, Mai 1993, und einem Flächengewicht von 150 g/m$^2$ bis 600 g/m$^2$ erhalten wird. Die Einstellung des Flächengewichts kann, wie dem Fachmann bekannt durch geeignete Einstellung des Flächengewichts bei der Vlieslegung erfolgen. Bevorzugt erfolgt das thermische Behandeln bei Temperaturen von 110°C bis 220°C, bevorzugt von 120°C bis 200°C. Weiter bevorzugt erfolgt das thermische Behandeln in einem Durchluftofen.

Ein weiterer Gegenstand der Erfindung ist die Verwendung des erfindungsgemäßen schallabsorbierenden Vliesstoffs zur Schallabsorption im Automobilbereich, insbesondere im Automobilinnenraum.

Kurzbeschreibung der Figuren: Es zeigt

Fig. 1 eine fotographische Abbildung von Primär-Gerüstfasern,

Fig. 2 eine fotographische Abbildung von Reiß-Gerüstfasern,

Fig. 3 eine REM-Aufnahme einer verschmolzenen Primär-Bindefaser,

Fig. 4 eine REM-Aufnahme einer Reiß-Bindefaser (nicht wiederverschmolzen),

Fig. 5 eine REM-Aufnahme einer wiederverschmolzenen Reiß-Bindefaser,

Fig. 6 einen erfindungsgemäßen Vliesstoff mit Fasernestern,

Fig. 7 einen Vliesstoff, der lediglich Primärfasern und keine Fasernester enthält,

Fig. 8 die Schallabsorption erfindungsgemäßer Vliesstoffe in der Alpha Kabine.

Zur Bestimmung von erfindungsgemäß verwendeten Parametern werden die folgenden Messmethoden verwandt:

**Prüfverfahren zur Messung der Schallabsorption in Hallräumen (Alpha Kabine)**

Nach DIN EN ISO 354:2003, wird die Messung in einer Alpha Kabine durchgeführt. Die Messproben werden direkt auf dem Boden platziert und mit Rahmen gemessen.

**Bestimmung des Anteils der Reiß-Gerüststapelfasern und der Reiß-Kern-Mantel-Bindefasern in aufbereitetem Textilabfall**

Es werden mindestens 10 Proben (5g) dem aufbereiteten Textilabfall entnommen. Die Fasern werden händisch mit Pinzette getrennt. Kern-Mantel-Bindefasern, die eine zumindest teilweise zerstörte Bindekomponente aufweisen, werden als Reiß-Kern-Mantel-Bindefasern gewertet. Gerüststapelfasern, die eine unregelmäßige bis hin zu einer völlig zerstörten Kräuselungsstruktur aufweisen, werden als Reiß-Gerüststapelfasern gewertet.

**Bestimmung des Anteils der Reiß-Gerüststapelfasern und der Reiß-Kern-Mantel-Bindefasern im Vliesstoff**

Es werden mindestens 5 Proben aus dem Vliesstoff herausgeschnitten. An den Schnittkannten werden 10 Bereiche (1 cm$^2$) mikroskopisch (Auflösung wie in Fig.3 gezeigt) betrachtet. Kern-Mantel-Bindefasern, die einen unregelmäßigen Aufbau aufweisen, in dem z.B. zwei Kerne von einem gemeinsamen Mantel umschlossen werden oder der Mantel deformiert, z.B. verklumpt vorliegt, werden als Reiß-Kern-Mantel-Bindefasern gewertet. Gerüststapelfasern, die eine unregelmäßige bis hin zu einer völlig zerstörten Kräuselungsstruktur aufweisen, werden als Reiß-Gerüststapelfasern gewertet.

**Prüfverfahren für Vliesstoffe zur Bestimmung des Flächengewichts**

Nach ISO 9073-1 (1989-07), wobei die Fläche der Messprobe 100 mm x 100 mm beträgt.

**Prüfverfahren für Vliesstoffe zur Bestimmung der Dicke**

Nach **DIN EN** ISO 9073-2 (1997-02), Verfahren B und C.

**Bestimmung des Fasertiters**

Nach DIN 53810 (1981-02), (Feinheit von Spinnfasern - Begriffe und Messprinzipien) anhand Mikroskop und entsprechender Software zur Ermittlung der Faserdurchmesser. Es sind 4 Mikropräparate aus insgesamt >20 Einzelfasern vorzubereiten. Pro Mikropräparat werden Fasern mit einer Schere auf eine Länge von ca. 2-3 mm gekürzt und auf einen Objektträger mit Hilfe einer Präpariernadel aufgebracht. Anschließend werden die Faserdurchmesser in $\mu$m mit Zuhilfenahme der entsprechenden Software ermittelt und gemittelt. Der gemittelte Faserdurchmesser kann im Anschluss anhand folgender Formel in den Fasertiter *Tt* umgerechnet werden:

$$Tt\ [dtex] = \frac{\pi * d^2 * \rho}{400}$$

$d$    Faserdurchmesser in $\mu$m
$\rho$    Dichte der Faser in g/cm$^3$

**Bestimmung der Stapellänge**

Aus einer vorhandenen Faserprobe werden 10 Faserbündelchen ausgewählt, wobei aus jedem der 10 Faserbündelchen eine Einzelfaser mit Zuhilfenahme einer Pinzette entnommen wird und die Faserlänge der 10 Einzelfasern ermittelt wird, indem ein freies Faserende in eine der zwei Einspannklemmen eingespannt wird und das zweite Faserende in die verbleibende Einspannklemme eingespannt wird. Durch Drehen des Handrades wird die Faser gestreckt, bis diese entkräuselt ist. Die Länge der Faser wird von der Skala am Messgerät abgelesen und ist in mm zu notieren. Der Mittelwert aller erfassten Ergebnisse gibt die Stapellänge an:

$$SP\ [mm] = \frac{\Sigma\,L}{n}$$

$\Sigma\,L$    Summe der einzelnen Faserlängen
n      Anzahl der Stichprobe

**Bestimmung des Schmelzpunktes**

Nach DIN EN ISO 11357-3 (2018-07), Dynamische Differenz-Thermoanalyse (DSC) - Teil 3: Bestimmung der Schmelz- und Kristallisationstemperatur und der Schmelz- und Kristallisationsenthalpie, wobei eine Aufheizrate von 10 K/min genommen wird.

**Höchstzugkraft quer/längs (nach DIN EN ISO 9073-3, 2022-05)**

Die Höchstzugkraft wird wie folgt bestimmt : Es wird eine Zugprüfmaschine nach DIN 51220 (2003) und DIN EN ISO 7500 (2018) und ein Stanzeisen 260x50 mm verwendet.

Probenvorbereitung:

Aus der vorhandenen Prüfprobe werden die Messproben gleichmäßig über die Warenbreite verteilt in Längs- und Querrichtung jeweils 10 cm vom Rand entfernt ausgestanzt.

Durchführung:

Die Messprobe wird gleichmäßig, mittig und lotrecht eingespannt, danach die Prüfung gemäß der maschinenspezifischen Arbeitsanweisung durchgeführt und mit der vorgegebenen Abzugsgeschwindigkeit = 200 mm/min und mit einer Vorkraft von 0,5N auseinandergezogen.

**Innere Vliesfestigkeit in Anlehnung nach DIN 54310 (1980)**

Im Unterschied zu der Norm wird der Vliesstoff parallel zur Fläche so aufgetrennt, dass die entstehenden Schenkel in die Klemmen einer Zugprüfmaschine eingespannt werden können.

**Prüfverfahren zur Bestimmung des Strömungswiderstandes**

Nach DIN EN 29053 (1993-05), Verfahren A (Luftgleichstromverfahren), wobei der effektive Probendurchmesser 100 mm beträgt und der Luftdruck 1000 mbar entspricht.

Im Folgenden wird die Erfindung anhand der folgenden nicht beschränkenden Beispiele näher erläutert.

Beispiel 1:

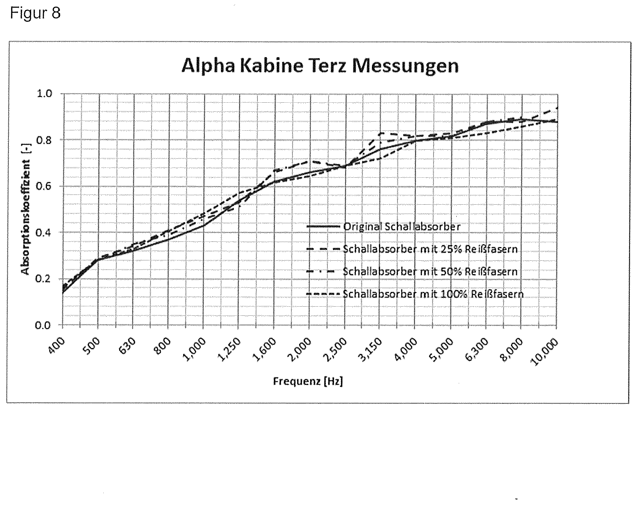

Als Textilabfall wird ein Akustikabsorber bestehend aus 80 Gew.% 1,7 dtex PET-Fasern (Gerüststapelfasern, 38mm) und 20 Gew.% 4,4 dtex PET/CoPET (Kern/Mantel-Bindefasern) verwendet. Der Textilabfall wird befeuchtet und in einem Reißverfahren in einer Reißmaschine, die eine Sägezahngarnitur als Reißorgan aufweist, wiedergeöffnet und aufbereiteter Textilabfall erhalten. Dieser weist nicht aufgelöste Textilreste in einem Anteil von weniger als 15 Gew.% auf. Aus dem aufbereiteten Textilabfall wird mittels einer Krempel ein Vlies ausgebildet und durch thermisches Behandeln ein neuer Akustikabsorber mit 250 g/m$^2$ und 10 mm Dicke hergestellt. Der erhaltene Akustikabsorber weist einen Strömungswiderstand von 153 Ns/m$^3$ und einen Schallabsorptionsgrad gemessen in der Alpha Kabine (DIN EN ISO 354:2003) wie in Fig. 8 gezeigt, auf. Ferner hat der Akustikabsorber ein gleichmäßiges Erscheinungsbild und weist gute mechanische Eigenschaften auf. So weist er eine Höchstzugkraft quer (nach DIN EN ISO 9073-2, 2022-05) von 62 N und eine innere Vliesfestigkeit, gemessen in Anlehnung nach DIN 54310 1980 von 1,28 N/5cm auf.

Beispiel 2:

Der in Beispiel 1 erhaltene aufbereitete Textilabfall wird mit Primär-Gerüststapelfasern und Primär-Kern/Mantel-Bindefasern vermischt, wobei Primärfasern enthaltender aufbereiteter Textilabfall erhalten wird, der die gleiche Zusammensetzung bzgl. des Anteils an Gerüst- und Bindefasern wie der ursprüngliche Textilabfall aus Beispiel 1 aufweist (80 Gew.% 1,7 dtex PET-Fasern (38mm) und 20 Gew.% % 4,4 dtex PET/CoPET-Fasern ). Der aufbereitete Textilabfall enthält dabei a) 25 Gew.% und b) 50 Gew.% wiedergeöffnete Fasern.

Aus dem aufbereiteten Textilabfall werden mittels einer Krempel Vliese ausgebildet und durch thermisches Behandeln neue Akustikabsorber mit 250 g/m$^2$ und 10 mm Dicke hergestellt. Die erhaltenen Akustikabsorber mit 25 Gew.% und mit 50 Gew.% wiedergeöffnete Fasern weisen einen Strömungswiderstand von jeweils 160 Ns/m$^3$ und einen Schallabsorptionsgrad wie in Fig. 8 gezeigt, auf. Sämtliche Akustikabsorber haben ein gleichmäßiges Erscheinungsbild und weisen gute mechanische Eigenschaften auf.

**Patentansprüche**

1. Thermisch verfestigter schallabsorbierender Vliesstoff mit einem Strömungswiderstand von 150 Ns/m$^3$ bis 5000 Ns/m$^3$, gemessen nach DIN EN 29053, Mai 1993 und einem Flächengewicht von 150 g/m$^2$ bis 600 g/m$^2$ umfassend

    a) Gerüststapelfasern mit einem mittleren Titer von 0,9 dtex bis 8,8 dtex, in einem Anteil von 50 Gew.% bis 90 Gew.%, bezogen auf das Gesamtgewicht des Vliesstoffs, und
b) Kern/Mantel-Bindefasern in einem Anteil von 10 Gew.% bis 50 Gew, bezogen auf das Gesamtgewicht des Vliesstoffs,

**dadurch gekennzeichnet, dass** die Gerüststapelfasern einen Anteil an Reiß-Gerüststapelfasern und die Kern/Mantel-Bindefasern einen Anteil an Reiß-Kern/Mantel-Bindefasern enthalten.

2. Thermisch verfestigter schallabsorbierender Vliesstoff nach Anspruch 1, **dadurch gekennzeichnet, dass** der Vliesstoff Primär-Gerüststapelfasern enthält, wobei die Primär-Gerüststapelfasern einen mittleren Titer von 0,9 dtex bis 8,8 dtex und/oder eine mittlere Stapellänge von 20 mm bis 80 mm aufweisen.

3. Thermisch verfestigter schallabsorbierender Vliesstoff nach Anspruch 1 oder 2, **dadurch gekennzeichnet, dass** der Vliesstoff Primär-Kern/Mantel-Bindefasern enthält, wobei die Primär-Kern/Mantel-Bindefasern Stapelfasern sind, bevorzugt mit einer mittleren Stapellänge von 20 mm bis 80 mm.

4. Thermisch verfestigter schallabsorbierender Vliesstoff nach einem oder mehreren der vorangehenden Ansprüche, **dadurch gekennzeichnet, dass** der Vliesstoff Primär-Gerüststapelfasern und/oder Primär-Kern/Mantel-Bindefasern enthält, wobei die Reiß-Kern/Mantel-Bindefasern vorzugsweise den gleichen mittleren Titer und/oder die gleichen Polymere wie die Primär-Kern/Mantel-Bindefasern aufweisen und/oder die Reiß-Gerüstfasern den gleichen mittleren Titer und/oder die gleichen Polymere wie die Primär-Gerüstfasern aufweisen.

5. Thermisch verfestigter schallabsorbierender Vliesstoff nach einem oder mehreren der vorangehenden Ansprüche, **dadurch gekennzeichnet, dass** der Anteil an Reiß-Gerüststapelfasern bezogen auf das Gesamtgewicht der Gerüststapelfasern 10 bis 100 Gew. % beträgt und/oder der Anteil an Reiß-Kern/Mantel-Bindefasern bezogen auf das Gesamtgewicht der Kern/Mantel-Bindefasern 10 bis 100 Gew. % beträgt.

6. Thermisch verfestigter schallabsorbierender Vliesstoff nach einem oder mehreren der vorangehenden Ansprüche, **dadurch gekennzeichnet, dass** der Vliesstoff, jeweils bezogen auf das Gesamtgewicht des Vliesstoffs enthält:

a) 0 Gew.% bis 70 Gew. %, vorzugsweise von 10 Gew.% bis 65 Gew. %, Primär-Gerüststapelfasern;

b) 0 Gew.% bis 70 Gew. %, vorzugsweise von 5 Gew.% bis 60 Gew. %, Primär-Kern/Mantel-Bindefasern;
c) 5 Gew.% bis 90 Gew.% Reiß-Gerüststapelfasern;
d) 1 Gew.% bis 50 Gew.%, noch bevorzugter von 5 Gew.% bis 40 Gew.%, Reiß-Kern/Mantel-Bindefasern.

7. Thermisch verfestigter schallabsorbierender Vliesstoff nach einem oder mehreren der vorangehenden Ansprüche, **dadurch gekennzeichnet, dass** der Vliesstoff hergestellt ist aus Textilabfall, der so in einem Reißverfahren aufbereitet wurde, dass der aufbereitete Textilabfall nicht aufgelöste Textilreste, insbesondere Nissen und Flächenstücke, in einem Anteil von weniger als 30 Gew.%, bezogen auf die Gesamtmenge an aufbereitetem Textilabfall enthält.

8. Verfahren zur Herstellung eines schallabsorbierenden Vliesstoffs mit einem Strömungswiderstand von 150 Ns/m$^3$ bis 5000 Ns/m$^3$ und einem Flächengewicht von 150 g/m$^2$ bis 600 g/m$^2$ umfassend folgende Schritte:

I. Bereitstellen von Textilabfall, enthaltend

a) Gerüststapelfasern mit einem mittleren Titer von 0,9 dtex bis 8,8 dtex in einem Anteil von 50 Gew.% bis 90 Gew.%, bezogen auf das Gesamtgewicht des Textilabfalls; sowie
b) Kern/Mantel-Bindefasern in einem Anteil von 10 Gew.% bis 50 Gew.%, bezogen auf das Gesamtgewicht des Textilabfalls;

II. zumindest teilweises Auflösen der textilen Struktur des Textilabfalls in einem Reißprozess, wodurch aufbereiteter Textilabfall erhalten wird, der einen Anteil an Reiß-Gerüststapelfasern und einen Anteil an Reiß-Kern/Mantel-Bindefasern aufweist;
III. Ausbilden eines Vlieses aus dem aufbereitetem Textilabfall;
IV. thermisches Behandeln des Vlieses, wobei der schallabsorbierende Vliesstoff erhalten wird.

9. Verfahren nach Anspruch 8, weiterhin umfassend einen Schritt I.2, in dem der Textilabfall befeuchtet wird.

10. Verfahren nach Anspruch 8 oder 9, **dadurch gekennzeichnet, dass** der Reißprozess in einer Reißmaschine durchgeführt wird, deren Wirkprinzip darin besteht, dass der Textilabfall durch ein transportierend und gleichzeitig klemmend wirkendes Einzugssystem einer Reißeinheit, vorzugsweise einer rotierenden Trommel, auf der Reißorgane angeordnet sind, zugeführt wird, wobei die Reißorgane als Sägezahngarnitur ausgebildet sind.

**11.** Verfahren nach einem oder mehreren der Ansprüche 8 bis 10, **dadurch gekennzeichnet, dass** der Textilabfall mehrere Male einem Reißvorgang unterzogen wird.

**12.** Verfahren nach einem oder mehreren der Ansprüche 8 bis 11, **dadurch gekennzeichnet, dass** die textile Struktur des Textilabfalls in Schritt II. so stark aufgelöst wird, dass der aufbereitete Textilabfall höchstens 30 Gew.%, nicht aufgelöste Textilreste, wie Nissen und Flächenstücke und/oder der aufbereitete Textilabfall mindestens 70 Gew.%, bezogen auf das Gesamtgewicht des aufbereiteten Textilabfalls, textile Einzelfasern enthält.

**13.** Verfahren nach einem oder mehreren der Ansprüche 8 bis 12, weiterhin umfassend das Vermischen des in Schritt II. erhaltenen aufbereiteten Textilabfalls mit Primär-Gerüststapelfasern und/oder Primär-Kern/Mantel-Bindefasern.

**14.** Verfahren nach einem oder mehreren der Ansprüche 8 bis 13, **dadurch gekennzeichnet, dass** ein Vliesstoff nach einem oder mehreren der Ansprüche 2 bis 7 hergestellt wird.

**15.** Verwendung eines schallabsorbierenden Vliesstoffs nach einem oder mehreren der Ansprüche 1 bis 7 zur Schallabsorption im Automobilbereich.

**Claims**

**1.** Thermally consolidated sound-absorbing nonwoven fabric having an airflow resistance of 150 Ns/m$^3$ to 5000 Ns/m$^3$, measured in accordance with DIN EN 29053, May 1993 and a surface weight of 150 g/m$^2$ to 600 g/m$^2$, comprising

a) scaffold staple fibres having a mean linear density of 0.9 dtex to 8.8 dtex, in a proportion of 50% by weight to 90% by weight, based on the total weight of the nonwoven fabric, and
b) core-sheath binder fibres in a proportion of 10% by weight to 50% by weight, based on the total weight of the nonwoven fabric,

**characterized in that** the scaffold staple fibres contain a proportion of pulled scaffold staple fibres and the core-sheath binder fibres contain a proportion of pulled core-sheath binder fibres.

**2.** Thermally consolidated sound-absorbing nonwoven fabric according to Claim 1, **characterized in that** the nonwoven fabric contains primary scaffold staple fibres, wherein the primary scaffold staple fibres have a mean linear density of 0.9 dtex to 8.8 dtex and/or a mean staple length of 20 mm to 80 mm.

**3.** Thermally consolidated sound-absorbing nonwoven fabric according to Claim 1 or 2, **characterized in that** the nonwoven fabric contains primary core-sheath binder fibres, wherein the primary core-sheath binder fibres are staple fibres, preferably having a mean staple length of 20 mm to 80 mm.

**4.** Thermally consolidated sound-absorbing nonwoven fabric according to one or more of the preceding claims, **characterized in that** the nonwoven fabric contains primary scaffold staple fibres and/or primary core-sheath binder fibres, wherein the pulled core-sheath binder fibres preferably have the same mean linear density and/or the same polymers as the primary core-sheath binder fibres and/or the pulled scaffold fibres have the same mean linear density and/or the same polymers as the primary scaffold fibres.

**5.** Thermally consolidated sound-absorbing nonwoven fabric according to one or more of the preceding claims, **characterized in that** the proportion of pulled scaffold staple fibres based on the total weight of the scaffold staple fibres is 10% to 100% by weight and/or the proportion of pulled core-sheath binder fibres based on the total weight of the core-sheath binder fibres is 10 to 100% by weight.

**6.** Thermally consolidated sound-absorbing nonwoven fabric according to one or more of the preceding claims, **characterized in that** the nonwoven fabric, based in each case on the total weight of the nonwoven fabric, contains:

a) 0% by weight to 70% by weight, preferably from 10% by weight to 65% by weight, of primary scaffold staple fibres;
b) 0% by weight to 70% by weight, preferably from 5% by weight to 60% by weight, of primary core-sheath binder fibres;
c) 5% by weight to 90% by weight of pulled scaffold staple fibres;
d) 1% by weight to 50% by weight, more preferably from 5% by weight to 40% by weight, of pulled core-sheath binder fibres.

**7.** Thermally consolidated sound-absorbing nonwoven fabric according to one or more of the preceding claims, **characterized in that** the nonwoven fabric is produced from textile waste which has been prepared in a pulling process such that the processed textile waste contains undissociated textile remnants, particularly neps and sheet pieces, in a proportion of less than 30% by weight, based on the total amount of processed textile waste.

8. Method for the production of a sound-absorbing nonwoven fabric having an airflow resistance of 150 Ns/m$^3$ to 5000 Ns/m$^3$ and a surface weight of 150 g/m$^2$ to 600 g/m$^2$, comprising steps as follows:

I. provision of textile waste containing

a) scaffold staple fibres having a mean linear density of 0.9 dtex to 8.8 dtex in a proportion of 50% by weight to 90% by weight, based on the total weight of the textile waste; and
b) core-sheath binder fibres in a proportion of 10% by weight to 50% by weight, based on the total weight of the textile waste;

II. at least partial dissociation of the textile structure of the textile waste in a pulling process, whereby processed textile waste is obtained which has a proportion of pulled scaffold staple fibres and a proportion of pulled core-sheath binder fibres;
III. formation of a nonwoven from the processed textile waste;
IV. thermal treatment of the nonwoven, to afford the sound-absorbing nonwoven fabric.

9. Method according to Claim 8, further comprising a step I.2, in which the textile waste is moistened.

10. Method according to Claim 8 or 9, **characterized in that** the pulling process is carried out in a pulling machine whose principle of action is that the textile waste is supplied by a conveying and at the same time clamping feed system to a pulling unit, preferably a rotating drum, on which pulling members are arranged, wherein the pulling members are embodied as a sawtooth clothing.

11. Method according to one or more of Claims 8 to 10, **characterized in that** the textile waste is subjected to a pulling operation two or more times.

12. Method according to one or more of Claims 8 to 11, **characterized in that** the textile structure of the textile waste is dissociated in step II. to an extent such that the processed textile waste contains at most 30% by weight of undissociated textile remnants, such as neps and sheet pieces, and/or the processed textile waste contains at least 70% by weight, based on the total weight of the processed textile waste, of individual textile fibres.

13. Method according to one or more of Claims 8 to 12, further comprising the mixing of the processed textile waste obtained in step II. with primary scaffold staple fibres and/or primary core-sheath binder fibres.

14. Method according to one or more of Claims 8 to 13, **characterized in that** a nonwoven fabric according to one or more of Claims 2 to 7 is produced.

15. Use of a sound-absorbing nonwoven fabric according to one or more of Claims 1 to 7 for sound absorption in the automotive sector.

**Revendications**

1. Non-tissé thermiquement solidifié à absorption de bruit avec une résistance à l'écoulement de 150 Ns/m$^3$ à 5000 Ns/m$^3$, mesurée selon la norme DIN EN 29053, mai 1993 et un grammage de 150 g/m$^2$ à 600 g/m$^2$ comprenant

a) des fibres discontinues d'armature avec un titre moyen de 0,9 dtex à 8,8 dtex en une proportion de 50 % en poids à 90 % en poids par rapport au poids total du non-tissé, et
b) des fibres de liaison centrales/extérieures en une proportion de 10 % en poids à 50 % en poids par rapport au poids total du non-tissé,

**caractérisé en ce que** les fibres discontinues d'armature contiennent une proportion de fibres discontinues d'armature déchirables et les fibres de liaison centrales/extérieures contiennent une proportion de fibres de liaison centrales/extérieures déchirables.

2. Non-tissé thermiquement solidifié à absorption de bruit selon la revendication 1, **caractérisé en ce que** le non-tissé contient des fibres discontinues d'armature primaires, les fibres discontinues d'armature primaires présentant un titre moyen de 0,9 dtex à 8,8 dtex et/ou une longueur moyenne de 20 mm à 80 mm.

3. Non-tissé thermiquement solidifié à absorption de bruit selon la revendication 1 ou 2, **caractérisé en ce que** le non-tissé contient des fibres de liaison centrales/extérieures primaires, les fibres de liaison centrales/extérieures primaires étant des fibres discontinues, de manière préférée avec une longueur moyenne de 20 mm à 80 mm.

4. Non-tissé thermiquement solidifié à absorption de bruit selon l'une ou plusieurs des revendications précédentes, **caractérisé en ce que** le non-tissé contient des fibres discontinues d'armature primaires et/ou des fibres de liaison centrales/extérieures primaires, les fibres de liaison centrales/extérieures primaires présentant de préférence le même titre et/ou les mêmes polymères que les fibres de liaison centrales/extérieures primaires et/ou les fibres d'armature déchirables présentant le même titre moyen et/ou les mêmes polymères que les fibres d'armature primaires.

5. Non-tissé thermiquement solidifié à absorption de bruit selon l'une ou plusieurs des revendications précédentes, **caractérisé en ce que** la proportion en fibres discontinues d'armature déchirables par rapport au poids total des fibres discontinues d'armature va de 10 à 100 % en poids et/ou la proportion en fibres de liaison centrales/extérieures déchirables par rapport au poids total des fibres de liaison centrales/extérieures va de 10 à 100 % en poids.

6. Non-tissé thermiquement solidifié à absorption de bruit selon l'une ou plusieurs des revendications précédentes, **caractérisé en ce que** le non-tissé contient respectivement par rapport au poids total du non-tissé :

   a) 0 % en poids à 70 % en poids, de préférence de 10 % en poids à 65 % en poids de fibres discontinues d'armature primaires ;
   b) 0 % en poids à 70 % en poids, de préférence de 5 % en poids à 60 % en poids de fibres de liaison centrales/extérieures primaires ;
   c) 5 % en poids à 90 % en poids de fibres discontinues d'armature déchirables ;
   d) 1 % en poids à 50 % en poids, de manière davantage préférée de 5 % en poids à 40 % en poids des fibres de liaison centrales/extérieures déchirables.

7. Non-tissé thermiquement solidifié à absorption de bruit selon l'une ou plusieurs des revendications précédentes, **caractérisé en ce que** le non-tissé est fabriqué à partir de déchets textiles, qui ont été préparés dans un procédé de déchirement de telle sorte que les déchets textiles préparés contiennent des résidus textiles non dissous, en particulier des neps et des pièces plates, en une proportion inférieure à 30 % en poids par rapport à la quantité totale des déchets textiles préparés.

8. Procédé de fabrication d'un non-tissé thermiquement solidifié à absorption de bruit avec une résistance à l'écoulement de 150 Ns/m$^3$ à 5000 Ns/m$^3$ et un grammage de 150 g/m$^2$ à 600 g/m$^2$ comprenant des étapes suivantes :

   I. fourniture de déchets textiles contenant

   a) des fibres discontinues d'armature avec un titre moyen de 0,9 dtex à 8,8 dtex en une proportion de 50 % en poids à 90 % en poids par rapport au poids total des déchets textiles ; ainsi que
   b) des fibres de liaison centrales/extérieures en une proportion de 10 % en poids à 50 % en poids par rapport au poids total des déchets textiles ;

   II. dissolution au moins partielle de la structure textile des déchets textiles dans un processus de déchirage ce qui permet d'obtenir des déchets textiles préparés qui comportent une proportion de fibres discontinues de structure déchirables et une proportion de fibres de liaison centrales/extérieures déchirables ;
   III. réalisation d'une nappe de fibres à partir des déchets textiles préparés ;
   IV. traitement thermique de la nappe de fibres le non-tissé à absorption de bruit étant obtenu.

9. Procédé selon la revendication 8, comprenant par ailleurs une étape I.2 dans laquelle les déchets textiles sont humidifiés.

10. Procédé selon la revendication 8 ou 9, **caractérisé en ce que** le processus de déchirage est mis en œuvre dans une machine à déchirer dont le principe de fonctionnement consiste **en ce que** les déchets textiles sont amenés à une unité de déchirement, de préférence un tambour rotatif, sur lequel sont disposés des éléments de déchirement, par un système d'alimentation de transport et de serrage simultané, les éléments de déchirement étant réalisés comme une garniture en dents de scie.

11. Procédé selon l'une ou plusieurs des revendications 8 à 10, **caractérisé en ce que** les déchets textiles sont soumis à plusieurs reprises à une opération de déchirement.

12. Procédé selon l'une ou plusieurs des revendications 8 à 11, **caractérisé en ce que** la structure textile des déchets textiles est si fortement dissoute lors de l'étape II. que les déchets textiles préparés contiennent au maximum 30 % en poids de résidus textiles non dissous, comme des neps et des pièces de surface et/ou les déchets textiles préparés contiennent au moins 70 %, par rapport au poids total des déchets textiles préparés, des fibres individuelles textiles.

13. Procédé selon l'une ou plusieurs des revendications 8 à 12, comprenant par ailleurs le mélange des déchets textiles préparés obtenus lors l'étape II. à des fibres discontinues de structure primaires et/ou à des fibres de liaison centrales/extérieures primaires.

14. Procédé selon l'une ou plusieurs des revendications 8 à 13, **caractérisé en ce qu'**un non-tissé est fabriqué selon une ou plusieurs des revendications 2 à 7.

**15.** Utilisation d'un non-tissé à absorption de bruit selon l'une ou plusieurs des revendications 1 à 7 pour l'absorption de bruit dans le domaine automobile.

Figur 1

Figur 2

Figur 3

Figur 4

Figur 5

Figur 6

Figur 7

Figur 8

**Alpha Kabine Terz Messungen**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3246442 A

**In der Beschreibung aufgeführte Nicht-Patentliteratur**

- **HILMAR FUCHS**. Vliesstoffe: Rohstoffe, Herstellung, Anwendung, Eigenschaften, Prüfung. Wiley VCH, 18 July 2012